Europäisches Patentamt

European Patent Office

Office européen des brevets

(19)

(11) **EP 0 793 165 B1**

(12) **FASCICULE DE BREVET EUROPEEN**

(45) Date de publication et mention
de la délivrance du brevet:
**19.08.1998 Bulletin 1998/34**

(51) Int Cl.⁶: **G06F 7/72**

(21) Numéro de dépôt: **97470004.9**

(22) Date de dépôt: **11.02.1997**

(54) **Coprocesseur d'arithmétique modulaire permettant de réaliser rapidement des opération non modulaires**

Koprozessor für moduläre Arithmetik mit einer schnellen Ausführung von nicht-modulären Operationen

Modular arithmetic coprocessor for fast execution of non-modular operations

(84) Etats contractants désignés:
**DE FR GB IT**

(30) Priorité: **01.03.1996 FR 9602843**
**30.04.1996 FR 9605668**

(43) Date de publication de la demande:
**03.09.1997 Bulletin 1997/36**

(73) Titulaire: **SGS-THOMSON MICROELECTRONICS SA**
**94250 Gentilly (FR)**

(72) Inventeur: **Monier, Guy**
**57000 Metz (FR)**

(74) Mandataire: **Schmit, Christian Norbert Marie**
**Cabinet Ballot-Schmit,**
**18 Place du Forum**
**57000 Metz (FR)**

(56) Documents cités:
**EP-A- 0 601 907**

## Description

L'invention concerne un coprocesseur d'arithmétique modulaire amélioré de manière à effectuer rapidement des opérations non modulaires. Plus précisément, l'invention concerne l'amélioration d'un coprocesseur d'arithmétique permettant de réaliser des opérations modulaires selon la méthode de Montgomery, afin d'étendre les possibilités d'un tel dispositif. La méthode de Montgomery permet d'effectuer des calculs modulaires dans un corps fini $GF(2^n)$ (corps de Galois) sans effectuer de divisions.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrites par exemple dans un document D1 consistant en une demande de brevet français publiée sous le numéro 2 679 054.

On trouve dans le commerce des circuits intégrés dédiés à de telles applications, par exemple le produit fabriqué par la société SGS-Thomson Microelectronics et portant la référence ST16CF54, bâti autour d'une association de type unité centrale - coprocesseur arithmétique, et dédié à la mise en oeuvre de calculs modulaires. Le coprocesseur utilisé permet de traiter des opérations modulaires en utilisant la méthode de Montgomery. Il fait l'objet de la demande de brevet européen publiée sous le numéro 0 601 907 A2 que l'on appellera par la suite le document D2. Ce coprocesseur est illustré sur la figure 1 (cette figure correspondant à la figure 2 du document D2).

L'opération de base (appelée Pfield) mise en oeuvre par ce coprocesseur consiste, à partir de trois données binaires A (multiplicande), B (multiplieur), et N (modulo), codées sur un nombre entier n de bits, à produire une donnée binaire $P_{field}(A, B)_N$ codée sur n bits, telle que $P_{field}(A, B)_N = A * B * I \bmod N$. I est une donnée binaire, appelée erreur, et codée sur n bits tels que $I = 2^{-n} \bmod N$ (plus précisément, la valeur de I dépend du nombre de blocs de k bits, k un entier, considérés pour le codage de A). Pour réaliser l'opération $A * B * I \bmod N$, on considère que les données sont codées sur m mots de k bits (m et k étant des nombres entiers), avec $m * k = n$. On fournit les mots des données A et B à un circuit de multiplication 19 ayant une entrée série pour recevoir B, une entrée parallèle pour recevoir les blocs de k bits de A, et une sortie série.

Dans le coprocesseur décrit dans le document D2, on a $k = 32$ et $m = 8$ ou 16. Ce circuit peut être utilisé pour produire le résultat de la multiplication modulaire $A * B \bmod N$. La multiplication modulaire se décompose en deux opérations élémentaires Pfield successives. On calcule $P_{field}(P_{field}(A,B)_N, H)_N$, avec H une donnée codée sur n bits, appelée paramètre de correction d'erreur, et égale à $2^{2n} \bmod N$. Pour de plus amples détails sur la mise en oeuvre de la multiplication modulaire, on pourra se reporter au document D2. Plusieurs possibilités de calcul sont déjà connues; elles consistent à utiliser soit une méthode logicielle, soit un circuit spécialisé tel que celui illustré dans le document D2.

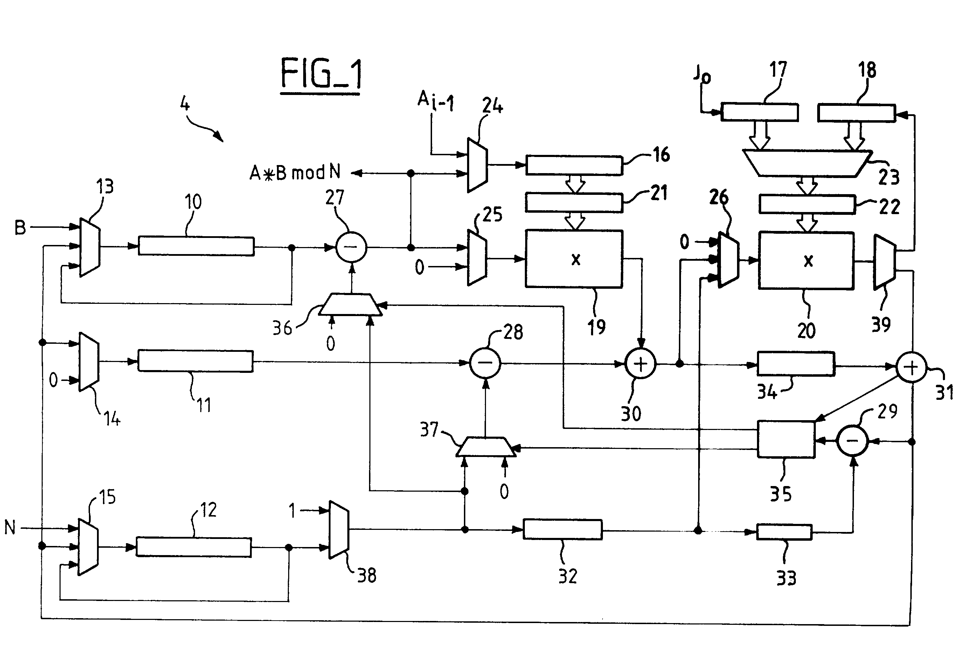

Le circuit illustré sur la figure 1 comprend :

- trois registres à décalage 10, 11 et 12 à entrée et sortie série, ces registres comportant un nombre n de cellules, avec $n = m * k$,
- des multiplexeurs 13, 14 et 15 placés respectivement devant les entrées des registres 10, 11 et 12,
- trois registres 16, 17 et 18 à entrée série et sortie parallèle, et comportant k cellules,
- deux circuits 19 et 20 de multiplication comprenant une entrée série, une entrée parallèle et une sortie série,
- deux registres 21 et 22 de k cellules,
- des multiplexeurs 24, 25, 26, 36, 37 et 38,
- un démultiplexeur 39,
- des circuits 27, 28 et 29 de soustraction série,
- des circuits 30 et 31 d'addition série,
- des cellules à retard 32, 33 et 34 pour retarder de k temps de cycle la propagation de données binaires,
- un circuit 35 de comparaison.

Pour plus de détails sur les arrangements des différents éléments du circuit entre eux, on pourra se reporter au document D2, en particulier aux figures 2 et 3, et aux extraits de la description s'y rapportant : page 15 - ligne 54 à page 16 - ligne 13, et page 17 - ligne 50 à page 18 - page 55.

L'utilisation du circuit illustré sur la figure 1 pour réaliser une opération $P_{field}(A, B)_N$ où A, B, et N sont codés sur n bits en m mots de k bits, N est impair et A est découpé en m mots $A_{i-1}$ (avec i indice entier variant de 1 à m), comprend les étapes suivantes :

1 - initialisation du circuit :

- calcul de manière logicielle d'un paramètre $J_0$ défini par la relation :

$$[(N^* J_0) + 1] \bmod 2^k = 0$$

- chargement en série du paramètre $J_0$ dans le registre 17,
- chargement en série de B dans le registre 10,
- chargement en série de N dans le registre 12,
- chargement en série de $A_0$ dans le registre 16,
- chargement en série de n zéros logiques consécutifs dans le registre 11,
- initialisation des deux circuits 19 et 20 de multiplication, des trois circuits 27, 28 et 29 de soustraction, et des deux circuits 30 et 31 d'addition.

2 - mise en oeuvre d'une boucle indicée par i avec i variant de 1 à m.

- chargement en parallèle dans le registre 21 du contenu du registre 16,
- réalisation de différentes opérations élémentaires afin d'effectuer les calculs suivants :

$$X(i) = S(i - 1) + B {}^* A_{i-1}$$

$$Y_0(i) = [X(i) {}^* J_0 ] \bmod 2^k,$$

$$Z(i) = X(i) + [N {}^* Y_0(i)]$$

$$S(i) = Z/2^k, / \text{ étant la division entière,}$$

soustraction lors de l'itération suivante de N ou 0 à S suivant que S soit supérieur ou non à N,

3 - sortie du résultat S(k) par l'intermédiaire d'une borne de sortie.

Pour plus de détails sur le déroulement d'un tel procédé, on peut se référer au document D2, et plus particulièrement aux extraits suivants : page 4 - ligne 41 à page 6 - ligne 17 et page 19 - lignes 7 à 49.

Jusqu'à présent, l'utilisation du circuit illustré sur la figure 1 permet d'optimiser des traitements (en terme de durée de calcul, de taille mémoire, etc.) pour des opérations modulaires utilisant une taille de donnée fixée, en l'occurrence 256 ou 512 bits (selon que m soit égal à 8 ou à 16). Or, la cryptographie nécessite des machines de plus en plus performantes, travaillant de plus en plus vite et utilisant des clefs de plus en plus complexes. On s'oriente ainsi vers la manipulation de données codées sur 768 ou même 1024 bits. Pour traiter de telles données, on peut envisager de réaliser des circuits de dimensions plus importantes en adaptant les éléments du circuit aux tailles des données. Cette solution peut poser des problèmes dans des applications telles que les cartes à puce pour lesquelles la taille des circuits est physiquement limitée à cause des différences de flexibilité entre les cartes et les substrats de silicium. De plus, il est demandé d'intégrer de plus en plus d'éléments fonctionnels différents sur une telle carte et la place disponible pour un circuit de cryptage en est d'autant plus réduite. Il faut donc trouver des solutions permettant de limiter l'augmentation de la taille de ce circuit, tout en permettant de fonctionner de manière optimum pour des données de taille supérieure à la taille des registres prévues initialement. Cette problématique ne se limite pas à des coprocesseurs d'arithmétique modulaire traitant des données d'une taille fixe de 256 ou 512 bits. Elle est également transposable plus généralement à des coprocesseurs manipulant des données et qu'on souhaite utiliser pour effectuer des opérations sur des données dont la taille dépasse leur capacité de traitement.

Si on désire réaliser des opérations modulaires utilisant des opérandes d'une taille supérieure à ce que gère le coprocesseur (c'est-à-dire en pratique à la taille des registres), on peut utiliser un processeur classique (8, 16, ou 32 bits), une mémoire et le coprocesseur de la figure 1, le coprocesseur servant à effectuer des multiplications.

Il est possible d'effectuer avec le coprocesseur décrit dans D2 des multiplications A * B classiques sur des tailles allant jusqu'à n bits en procédant de la manière suivante :

1 - initialisation :

- chargement dans le registre 17 de k zéros logiques,

- chargement dans le registre 10 de B,
- chargement dans le registre 11 de n zéros logiques,
- chargement dans le registre 16 du mot $A_0$ de k bits de A,
- initialisation du multiplieur 19,
- initialisation des circuits d'addition et de soustraction 28, 30 et 31.

<u>2 - mise en oeuvre d'une boucle de calcul avec i indice variant de 1 à m:</u>

- chargement du contenu du registre 16 dans le registre 21,
- réalisation, par décalage à droite simultané des registres 10 et 11, de la multiplication de $A_{i-1}$ par B et de l'addition du contenu du registre 11 avec le résultat du produit,
- stockage des k bits de poids faible dans le registre 12 par décalage à droite de k bits,
- stockage des n bits de poids fort du résultat dans le registre 11,
- chargement du mot $A_i$ dans le registre 16 (de préférence pendant le déroulement d'une ou de plusieurs étapes précédentes).

A la fin d'un tel procédé, on a donc le poids faible du résultat dans le registre 12 et le poids fort du résultat dans le registre 11. Il suffit de rajouter une borne de sortie reliée à la sortie des registres 11 et 12 pour pouvoir récupérer le résultat en sortie du coprocesseur.

Il est possible d'effectuer la multiplication d'une donnée B codée sur n bits par une donnée A codée sur m' mots avec m' entier supérieur à m. Pour cela, on exécute la boucle avec i variant de 1 à m'. Toutes les m itérations, on sort le contenu du registre 12 par une borne de sortie.

Le coprocesseur pouvant être utilisé pour réaliser des multiplications classiques, il est possible de réaliser des opérations modulaires sur des opérandes codées sur un nombre m' ∗ k bits avec m' > m. Pour cela on manipule les opérandes A, B et N en les divisant en q (q entier) sous-opérandes de n bits : $A_{q-1} A_{q-2} ... A_0$, $B_{q-1} B_{q-2} ... B_0$, $N_{q-1} N_{q-2} ... N_0$. On utilise le coprocesseur pour réaliser des multiplications classiques sur les sous-opérandes.

La méthode est la suivante :

<u>1.1 - Multiplication de B par la première sous-opérande de A :</u>

1 - Calcul de $A_0 * B_0$.
Le résultat est de la forme $R_{10} R_{00}$ avec $R_{10}$ et $R_{00}$ données codées sur m mots de k bits.
On sort $R_{10}$ et $R_{00}$ des registres 11 et 12 et on les stocke dans une mémoire.
2 - Calcul de $A_0 * B_1$.
.
.
Le résultat est de la forme $R_{11} R_{01}$ avec $R_{11}$ et $R_{01}$ codées sur n bits.
On sort $R_{11}$ et $R_{01}$ des registres 11 et 12 et on les stocke dans une mémoire.
.
.
Q - Calcul de $A_0 * B_{q-1}$.
Le résultat est de la forme $R_{1q-1} R_{0q-1}$ avec $R_{1q-1}$ et $R_{0q-1}$ codées sur n bits.
On sort $R_{1q-1}$ et $R_{0q-1}$ des registres 11 et 12 et on les stocke dans une mémoire.

<u>1.2 - Calcul du résultat de la multiplication de B par la première sous-opérande de A :</u>

- calcul de $R_{10} + R_{01}$ et stockage du résultat, noté $X_1$,
- calcul de $c_1 + R_{11} + R_{02}$ ($c_1$ étant la retenue du calcul précédant) et stockage du résultat noté $X_2$,
.
.
- calcul de $c_{q-2} + R_{1q-2} + R_{0q-1}$ et stockage du résultat noté $X_{q-1}$ ,
- calcul de $c_{q-1} + R_{1q-1}$ et stockage du résultat noté $X_q$ .

Si on considère que $R_{00} = X_0$, alors le résultat de la multiplication est la donnée $X_q X_{q-1} ..... X_1 X_0$.
On pourra bien sûr effectuer les additions au fur et à mesure de la sortie des résultats, ce qui permet de minimiser la taille de la mémoire dans laquelle sont stockés les résultats.

1.3 - Calcul du résultat d'une multiplication :

$X_0 * J_0 = Y$, avec $Y$ de la forme $Y_1 Y_0$, $Y_1$ et $Y_0$ étant codées sur n bits, sortie et mémorisation de $Y_0$

1.4 - Calcul du résultat de la multiplication de la première sous-opérande de Y par N:

1 - Calcul de $Y_0 * N_0$.
Le résultat est de la forme $T_{10} T_{00}$ avec $T_{10}$ et $T_{00}$ codées sur n bits.
On sort $T_{10}$ et $T_{00}$ des registres 11 et 12 et on les stocke dans une mémoire.
2 - Calcul de $Y_0 * N_1$.
Le résultat est de la forme $T_{11} T_{01}$ avec $T_1$ et $T_{01}$ codées sur n bits.
On sort $T_{11}$ et $T_{01}$ des registres 11 et 12 et on les stocke dans une mémoire.
.
.
Q - Calcul de $Y_0 * N_{q-1}$.
Le résultat est de la forme $T_{1q-1} T_{0q-1}$ avec $T_{1q-1}$ et $T_{0q-1}$ codées sur n bits.
On sort $T_{1q-1}$ et $T_{0q-1}$ des registres 11 et 12 et on les stocke dans une mémoire.

1.5 - Calcul du résultat de la multiplication de N par la première sous-opérande de Y :

-  calcul de $T_{10} + T_{01}$ et stockage du résultat, noté $U_1$,
-  calcul de $c_1 + T_{11} + T_{02}$ ($c_1$ étant la retenue du calcul précédant) et stockage du résultat noté $U_2$,
   .
   .
-  calcul de $c_{q-2} + T_{1q-2} + T_{0q-1}$ et stockage du résultat noté $U_{q-1}$,
-  calcul de $c_{q-1} + T_{1q-1}$ et stockage du résultat noté $U_q$ .

Si on considère que $T_{00} = U_0$, alors le résultat de la multiplication est la donnée $U_q U_{q-1} ..... U_1 U_0$.
On pourra bien sûr effectuer les additions au fur et à mesure de la sortie des résultats, ce qui permet de minimiser la taille de la mémoire dans laquelle sont stockés les résultats.

1.6 - Calcul du résultat de la multiplication modulaire de B par la première sous-opérande de A :

-  Calcul de $U + X$ et stockage du résultat, noté Z.
   Le résultat Z de l'addition est de la forme (c) $Z_q Z_{q-1} ..... Z_1 Z_0$.
-  stockage de $S(1) = Z/2^k$ - (N ou 0).

2 - Reprise des étapes 1.1 à 1.6 en considérant la deuxième sous-opérande de A en modifiant l'étape 1.2 tel que ci-dessous :

-  calcul de $R_{10} + R_{01}$ et stockage du résultat, noté $W_1$ ,
-  calcul de $c_1 + R_{11} + R_{02}$ ($c_1$ étant la retenue du calcul précédant) et stockage du résultat noté $W_2$,
   .
   .
-  calcul de $c_{q-2} + R_{1q-2} + R_{0q-1}$ et stockage du résultat noté $W_{q-1}$,
-  calcul de $c_{q-1} + R_{1q-1}$ et stockage du résultat noté $W_q$.
   Puis :
-  calcul de $W + S(1)$ qui donne alors le résultat de la multiplication X avec X de la forme $X_q X_{q-1} ..... X_1 X_0$ et $W = W_q W_{q-1} ..... W_1 W_0$ avec $W_0 = R_{00}$.
   .
   .

Q - Reprises des étapes ci-dessus en considérant la q-ième sous-opérande de A.

Le résultat final du calcul est S(q) - (N ou 0).
Comme on le voit, le procédé nécessite un certain nombre d'échanges avec l'extérieur. Ces échanges sont pénalisants en terme de temps de calcul et d'espace mémoire pour stocker d'une part les résultats extraits du coprocesseur et d'autre part le programme exécutable correspondant au procédé qui est complexe. Généralement, l'intérêt des coprocesseurs est d'utiliser une fréquence d'horloge plus rapide que celle des autres éléments qui leur sont reliés. On minimise donc l'intérêt d'utiliser un coprocesseur si les traitements auxquels il est destiné impliquent des échanges avec des circuits (processeurs classiques, mémoires, etc.) fonctionnant plus lentement et à la vitesse desquels il devra s'adapter lors des échanges.

L'inventeur a cherché à modifier le coprocesseur illustré sur la figure 1 de sorte à améliorer le traitement de l'opération ci-dessus, et plus particulièrement à diminuer le temps de traitement.

Ainsi, l'invention concerne un coprocesseur convenant à la mise en oeuvre d'opération modulaire selon la méthode de Montgomery comprenant un premier, un deuxième et un troisième registres, au moins une borne d'entrée pour recevoir des données binaires à stocker dans ces registres, un circuit de multiplication permettant de réaliser une opération de multiplication entre deux données stockées dans les premier et troisième registres, un premier circuit d'addition permettant de réaliser une opération d'addition entre une donnée stockée dans le deuxième registre et une donnée produite par le circuit de multiplication, un circuit de soustraction placé entre le deuxième registre et le circuit d'addition permettant de réaliser une opération de soustraction entre une donnée stockée dans le deuxième registre et une donnée stockée dans un quatrième registre, une cellule à retard et un deuxième circuit d'addition placés entre le premier circuit d'addition et l'entrée du deuxième registre, caractérisé en ce qu'il comprend des moyens de multiplexage permettant de fournir à une entrée d'un des circuits d'addition le contenu du deuxième registre ou un état logique permanent, de relier une autre entrée dudit circuit d'addition à une sortie du circuit de multiplication et de relier une sortie dudit circuit d'addition à une entrée du deuxième registre.

L'invention sera mieux comprise, et d'autres particularités et avantages apparaîtront, à la lecture de la description qui va suivre et qui est à lire conjointement aux dessins annexés dans lesquels :

- la figure 1 représente un coprocesseur 4 selon l'état de la technique,
- la figure 2 représente un exemple typique de structure de circuit comprenant un coprocesseur,
- les figures 3, 4 et 5 représentent des coprocesseurs selon l'invention.

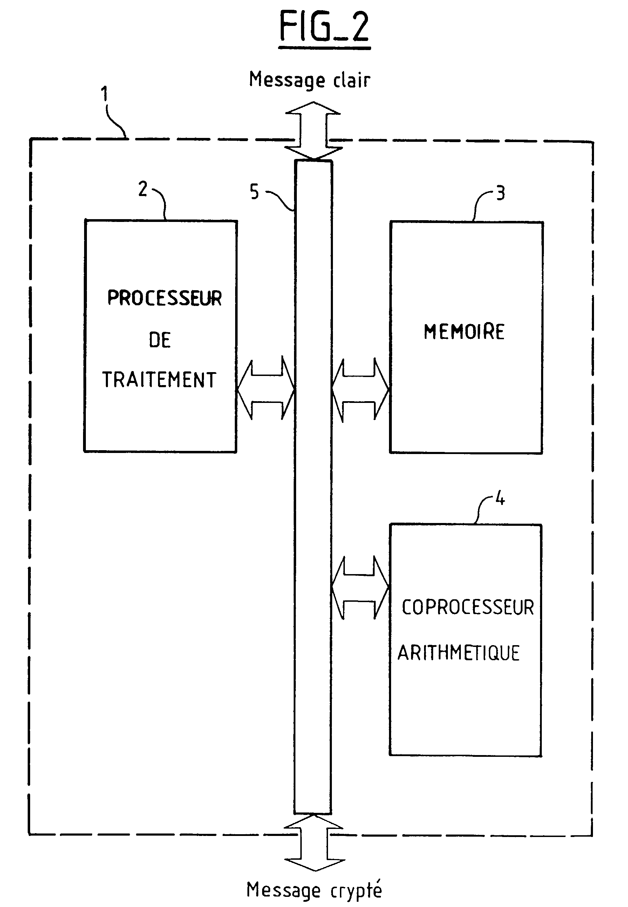

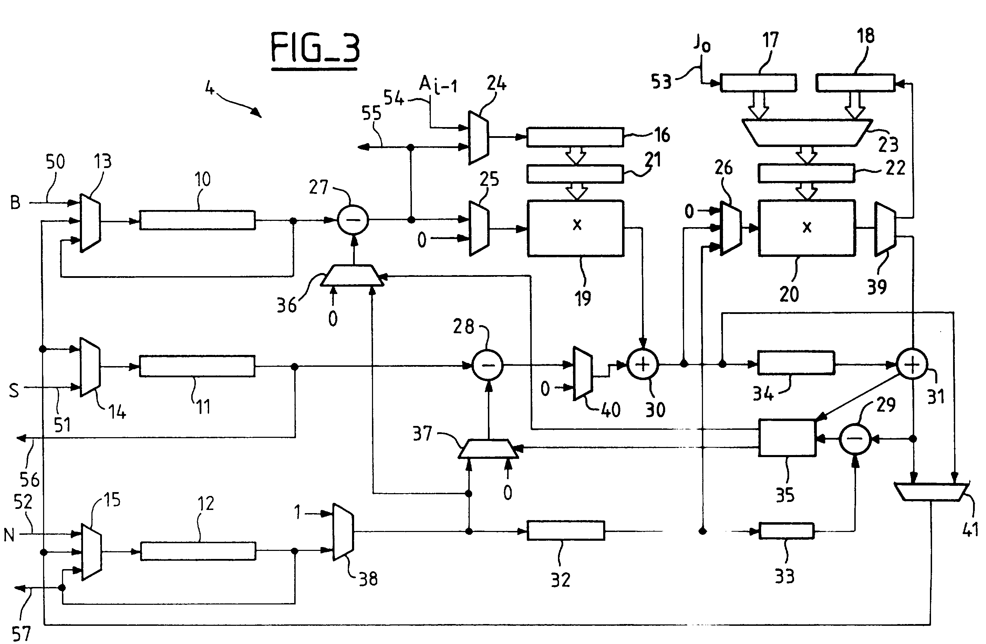

La figure 2 représente un circuit 1 de cryptage comprenant un processeur 2 de traitement (par exemple un processeur 8, 16, ou 32 bits), une mémoire 3, un coprocesseur 4, et un bus 5 de communication. Le bus 5 permet de relier les éléments 2, 3 et 4 ensemble et/ou à l'extérieur du circuit 1 afin d'échanger des données et/ou des signaux de commande. La mémoire permet de stocker des données binaires de différents formats. Le processeur 2 permet de gérer les échanges d'informations entre la mémoire 3, le coprocesseur 4 et l'extérieur. Le coprocesseur est une version modifiée du coprocesseur illustré sur la figure 1, tel qu'illustrée sur la figure 3, 4 ou 5.

La figure 3 représente un coprocesseur selon l'invention.

Le circuit illustré sur la figure 3 comprend :

- trois registres à décalage 10, 11 et 12 à entrée série et sortie série. Ces registres comportent un nombre n (n entier) de cellules, avec n = m * k (m et k entiers).
- un multiplexeur 13 comprenant trois entrées série et une sortie série, la sortie série étant reliée à l'entrée du registre 10, la première entrée étant reliée à une première borne d'entrée 50, la deuxième entrée étant reliée à la sortie du registre 10,
- un multiplexeur 14 comprenant deux entrées série et une sortie série, la sortie série étant reliée à l'entrée du registre 11, la première entrée étant reliée à une deuxième borne d'entrée 51,
- un multiplexeur 15 comprenant trois entrées série et une sortie série, la sortie série étant reliée à l'entrée du registre 12, la première entrée étant reliée à une troisième borne d'entrée 52, la deuxième entrée étant reliée à la sortie du registre 12,
- trois registres 16, 17 et 18 de k cellules comprenant une entrée série et une sortie parallèle, l'entrée du registre 17 étant reliée à une quatrième borne d'entrée 53,
- deux circuits 19 et 20 de multiplication comprenant une entrée série, une entrée parallèle pour recevoir k bits, et une sortie série,
- deux registres 21 et 22 de mémorisation de k cellules comprenant une entrée et une sortie parallèles, l'entrée du registre 21 étant reliée à la sortie du registre 16, la sortie du registre 21 étant reliée à l'entrée parallèle du circuit de multiplication 19, et la sortie du registre 22 étant reliée à l'entrée parallèle du circuit de multiplication 20,
- un multiplexeur 23 comprenant deux entrées parallèles et une sortie parallèle, la première entrée du multiplexeur 23 étant reliée à la sortie du registre 17, la deuxième entrée du multiplexeur 23 étant reliée à la sortie du registre 18, la sortie du multiplexeur 23 étant reliée à l'entrée du registre 22,
- deux multiplexeurs 24 et 25 comprenant chacun deux entrées série et une sortie série, la sortie du multiplexeur 24 étant reliée à l'entrée du registre 16, la première entrée du multiplexeur 24 étant reliée à une cinquième borne d'entrée 54, la sortie du multiplexeur 25 étant reliée à l'entrée série du circuit de multiplication 19, la première entrée du multiplexeur 25 étant reliée à un zéro logique,

- un multiplexeur 26 comprenant trois entrées série et une sortie série, la sortie étant reliée à l'entrée série du circuit de multiplication 20, la première entrée étant reliée à un zéro logique,

- des circuits 27, 28 et 29 de soustraction comprenant chacun deux entrées série et une sortie série, la première entrée du circuit 27 étant reliée à la sortie du registre 10, la sortie du circuit 27 étant reliée à chacune des deuxièmes entrées des multiplexeurs 24 et 25 et également à une borne de sortie 55, la première entrée du circuit 28 étant reliée à la sortie du registre 11,

- des circuits 30 et 31 d'addition comprenant chacun deux entrées série et une sortie série, la première entrée du circuit 30 étant reliée à la sortie du circuit 19, la sortie du circuit 30 étant reliée à la deuxième entrée du multiplexeur 26, la sortie du circuit 31 étant reliée à la première entrée du circuit 29,

- des cellules à retard 32, 33 et 34 pour retarder de k temps de cycle la propagation de données binaires (ces cellules étant typiquement des registres à décalage de k bits), ces cellules comprenant une entrée série et une sortie série, la sortie de la cellule 32 étant reliée d'une part à la troisième entrée du multiplexeur 26 et d'autre part à l'entrée de la cellule 33, la sortie de la cellule 33 étant reliée à la deuxième entrée du circuit 29, l'entrée de la cellule 34 étant reliée à la sortie du circuit 30, et la sortie de la cellule 34 étant reliée à la première entrée du circuit 31,

- un circuit 35 de comparaison comprenant deux entrées série et deux sorties, la première entrée étant reliée à la sortie du circuit 31, la deuxième entrée étant reliée à la sortie du circuit 29,

- deux multiplexeurs 36 et 37 comprenant chacun deux entrées série, une entrée de sélection, et une sortie série, chacune des premières entrées étant reliée à un zéro logique, chacune des entrées de sélection étant reliée à l'une des sorties du circuit 35, la sortie du multiplexeur 36 étant reliée à la deuxième entrée du circuit 27, la sortie du multiplexeur 37 étant reliée à la deuxième entrée du circuit 28,

- un multiplexeur 38 comprenant deux entrées série et une sortie série, la première entrée étant reliée à un "un" logique, la deuxième entrée étant reliée à la sortie du registre 12, la sortie étant reliée d'une part à l'entrée de la cellule 32 et d'autre part aux deuxièmes entrées des multiplexeurs 36 et 37,

- un démultiplexeur 39 comprenant une entrée série et deux sorties série, l'entrée étant reliée à la sortie du circuit 20, les sorties étant reliées respectivement à l'entrée du registre 18 et à la deuxième entrée du circuit 31,

- un multiplexeur 40 comprenant deux entrées série et une sortie série, la première entrée étant reliée à la sortie du circuit 28, la deuxième entrée étant reliée à un zéro logique, et la sortie étant reliée à la deuxième entrée du circuit 30;

- un multiplexeur 41 comprenant deux entrées série et une sortie série, la première entrée étant reliée à la sortie du circuit 30, la deuxième entrée étant reliée à la sortie du circuit 31, et la sortie étant reliée aux troisièmes entrées des multiplexeurs 13 et 15 et à la deuxième entrée du multiplexeur 14,

- deux bornes de sortie 56 et 57 reliées respectivement aux sorties des registres 11 et 12.

En ce qui concerne les bornes de sortie et d'entrée, on pourra choisir d'utiliser des bornes distinctes mais celles-ci pourront être aussi une ou des bornes d'entrée/sortie communes à plusieurs éléments du circuit. En utilisant des bornes distinctes, un avantage est de pouvoir recevoir et/ou fournir des données de et/ou à des éléments extérieurs au coprocesseur (tels que le processeur de traitement 2 par exemple) de manière simultanée, ce qui diminue la durée des échanges entre le circuit et des éléments extérieurs.

D'autre part, en ce qui concerne les éléments du circuit 4, la description ci-dessus doit aussi être comprise comme étant une description plus fonctionnelle que structurelle. En d'autres termes, il importe de pouvoir réaliser les connexions telles qu'indiquées entre des éléments réalisant les fonctions énumérées (multiplexage, addition, soustraction, etc.). En particulier, les multiplexeurs pourront être regroupées entre eux et comporter alors un nombre d'entrées, de sorties, et d'entrées de sélection plus importants. En ce qui concerne les multiplexeurs 25, 36, 37, et 40 qui ont une entrée recevant un signal fixe (zéro ou un logique), on pourra les incorporer fonctionnellement aux circuits 19, 27, 28 et 30 si ceux-ci comprennent une entrée de commande permettant d'imposer un état logique sur une de leur entrées.

Par rapport au circuit de la figure 1, le circuit de la figure 3 comprend donc deux multiplexeurs 40 et 41 supplémentaires et le multiplexeur 14 a sa première entrée reliée à une borne d'entrée. Le multiplexeur 40 permet de forcer à zéro la deuxième entrée du circuit d'addition 30 indépendamment du contenu du registre 11. Le multiplexeur 41 permet de relier la sortie du circuit 30 directement aux entrées des registres 10, 11 et 12, ce qui permet de réaliser simplement une opération non modulaire A * B + C. On ne retarde pas le résultat dans la cellule 34, contrairement au circuit illustré sur la figure 1. D'autre part, on s'affranchit de la prise en compte des circuits 20 et 31 qui implique, pour réaliser une multiplication classique, dans le cas du circuit de la figure 1, de réaliser une opération modulaire en considérant que $J_0 = 0$. On peut grâce à l'invention réaliser une multiplication non modulaire sans tenir compte des éléments du circuit 4 utilisés dans le cadre d'une opération Pfield. On peut donc envisager dans un tel cas de limiter la consommation du circuit 4 en inhibant le fonctionnement des éléments utilisés seulement dans le cadre d'une opération Pfield.

On notera que le multiplexeur 40 aurait pu être placé entre la sortie du registre 11 et la première entrée du circuit 28.

On pourrait aussi utiliser un multiplexeur 40 à trois entrées, la troisième entrée étant reliée à la sortie du registre 11. Cette solution permet de pouvoir s'affranchir de la présence du circuit 28. On peut alors diminuer la consommation globale du circuit 4 en prévoyant d'isoler ce circuit et éventuellement d'autres circuits (tels que le multiplexeur 37) qui lui sont rattachés fonctionnellement, quand le circuit 28 n'est pas utilisé.

Le coprocesseur illustré à la figure 3 permet, grâce à l'ajout des éléments 40 et 41, de réaliser des opérations Pfield sur des opérandes codées sur un nombre m' * k bits avec m' > m de manière plus simple et plus rapide que le circuit de la figure 1. Pour cela on manipule les opérandes A, B et N en les divisant en q (q entier) sous-opérandes de n bits : $A_{q-1} A_{q-2} ... A_0$, $B_{q-1} B_{q-2} ... B_0$, $N_{q-1} N_{q-2} ... N_0$. On notera que A et B pourront avoir en pratique des tailles différentes. On suppose ici, pour simplifier, que A et B ont la même taille. On ne rentrera pas dans le détail de fonctionnement au pas à pas des éléments du coprocesseur, celui-ci ne posant pas de problème à l'homme du métier connaissant le document D2.

La méthode est la suivante :

1.1 - <u>Multiplication de B par la première sous-opérande de A:</u>

1 - Calcul de $A_0 * B_0 + 0$.
Le résultat est de la forme $R_{10} R_{00}$ avec $R_{10}$ et $R_{00}$ données codées sur m mots de k bits.
On sort $R_{00} = X_0$ du registre 12 et on le stocke dans une mémoire (par exemple la mémoire 3 du circuit 1).
2 - Calcul de $A_0 * B_1 + R_{10}$ .
Le résultat est de la forme $R_{11} R_{01}$ avec $R_{11}$ et $R_{01}$ codées sur n bits.
On sort $R_{01} = X_1$ du registre 12 et on le stocke dans une mémoire.
.

.

Q - Calcul de $A_0 * B_{q-1} + R_{1q-2}$ .
Le résultat est de la forme $R_{1q-1} R_{0q-1}$ avec $R_{1q-1}$ et $R_{0q-1}$ codées sur n bits.
On sort $R_{1q-1} = X_q$ et $R_{0q-1} = X_{q-1}$ des registres 11 et 12 et on les stocke dans une mémoire.
Le résultat de la multiplication est la donnée $X_q X_{q-1} \cdots X_1 X_0$.

1.2 - <u>Calcul du résultat d'une multiplication:</u>

$X_0 * J_0 = Y$, avec Y de la forme $Y_1 Y_0$, $Y_1$ et $Y_0$ étant codées sur n bits, sortie et mémorisation de $Y_0$

1.3 - <u>Calcul du résultat de la multiplication de la première sous-opérande de Y par N :</u>

1 - Calcul de $Y_0 * N_0 + X_0$.
Le résultat est de la forme $T_{10} T_{00}$ avec $T_{10}$ et $T_{00}$ codées sur n bits.
On sort $T_{00} = Z_0$ du registre 12 et on le stocke dans une mémoire.
En pratique, on pourrait montrer que $Z_0 = 0$, et il n'est donc pas nécessaire de le mémoriser.
2 - Calcul de $Y_0 * N_1 + T_{10}$ .
Le résultat est de la forme $T_{11} T_{01}$ avec $T_1$ et $T_{01}$ codées sur n bits.
On sort $T_{01} = U_1$ du registre 12 et on le stocke dans une mémoire.
.

.

Q - Calcul de $Y_0 * N_{q-1} + T_{1q-2}$.
Le résultat est de la forme $T_{1q-1} T_{0q-1}$ avec $T_{1q-1}$ et $T_{0q-1}$ codées sur n bits.
On sort $T_{1q-1} = U_q$ et $T_{0q-1} = U_{q-1}$ des registres 11 et 12 et on les stocke dans une mémoire.
Le résultat de la multiplication est la donnée $U_q U_{q-1} .... U_1 U_0$.

1.4 - <u>Calcul du résultat de la multiplication modulaire de B par la première sous-opérande de A :</u>

- Calcul de U + X et stockage du résultat, noté Z.
Le résultat Z de l'addition est de la forme (c) $Z_q Z_{q-1} ..... Z_1 Z_0$.
- stockage de $S(1) = Z/2^k - (N$ ou $0)$.

2 - Reprise des étapes 1.1 à 1.4 en considérant la deuxième sous-opérande de A en modifiant l'étape 1.1 tel que ci-dessous :

1 - Calcul de $A_1 * B_0 + 0$.
Le résultat est de la forme $R_{10} R_{00}$ avec $R_{10}$ et $R_{00}$ données codées sur n bits.
On sort $R_{00} = W_0$ du registre 12 et on le stocke dans une mémoire (par exemple la mémoire 3 du circuit 1).
2 - Calcul de $A_1 * B_1 + R_{10}$.
Le résultat est de la forme $R_{11} R_{01}$ avec $R_{11}$ et $R_{01}$ codées sur n bits.
On sort $R_{01} = W_1$ du registre 12 et on le stocke dans une mémoire.
.

.

Q - Calcul de $A_1 * B_{q-1} + R_{1q-2}$.
Le résultat est de la forme $R_{1q-1} R_{0q-1}$ avec $R_{1q-1}$ et $R_{0q-1}$ codées sur n bits.
On sort $R_{1q-1} = W_q$ et $R_{0q-1} = W_{q-1}$ des registres 11 et 12 et on les stocke dans une mémoire.
Calcul de $W + S(1)$ qui donne alors le résultat de la multiplication X avec X de la forme $X_q X_{q-1} ..... X_1 X_0$
.

.

Q - Reprises des étapes ci-dessus en considérant la q-ième sous-opérande de A.

Le résultat final du calcul est $S(q) - (N$ ou $0)$.

**Gain en temps de calcul.**

Le temps de calcul est mesuré en nombre de cycles d'horloge du coprocesseur.

La multiplication du contenu du registre 10 par le contenu du registre 16 nécessite $(n + 2 . k)$ cycles (en ne tenant pas compte du chargement des registres et de l'initialisation du circuit) avec le circuit de l'état de la technique, et $(n + k)$ cycles avec le circuit de l'invention, la cellule 34 n'étant pas traversée. On considérera par ailleurs que les additions sont réalisées à l'aide d'un additionneur série dont le fonctionnement est cadencé par l'horloge du coprocesseur. Une addition nécessite alors n cycles.

- Méthode selon l'état de la technique.

Calcul des $A_i * B$: $q . q . m.(n + 2 . k)=n.q^2 . (m + 2)$
Calcul des W : $q . q . n = n . q^2$
Calcul des X : $(q - 1) . (q + 1) . n = n. (q^2 - 1)$
Calcul des Y: $q . m . (n + 2 . k)=n . q . (m + 2)$
Calcul des T:$q . q . m .(n + 2 . k)=n . q^2 . (m + 2)$
Calcul des U : $q . q . n = n. q^2$
Calcul des Z : $q . (q + 1) , n = n . (q^2 + q)$

Le nombre de cycles nécessaires pour réaliser les calculs est donné par la formule suivante : $2 . n . (m + 4) . q^2 + n. (m + 3) . q - n$.

- Méthode en utilisant l'invention.

Calcul des $A * B + R$ : $q . q . m . (n + k) = n . (m + 1) . q^2$
Calcul des X : $(q - 1) . (q + 1) . n = n . q^2 - n$
Calcul des Y : $q . m . (n + k) = n . (m + 1) . q$
Calcul des T: $q . q . m .(n + k)=n . (m + 1) . q^2$
Calcul des Z: $q .(q + 1) . n=n . q^2 + n. q$

Le nombre de cycles nécessaires pour réaliser les calculs est donné par la formule suivante : $2 . n . (m + 2) . q^2 + n.(m+2).q-n$.

Considérons $q = 3$ et $k = 32$.

Pour m = 8 ( n = 256), le premier procédé nécessite 63 488 cycles et le deuxième procédé nécessite 53 504 cycles, soit un gain de 15.72 %.

Pour m = 16 (n = 512), le premier procédé nécessite 212 992 cycles et le deuxième procédé nécessite 193 024 cycles, soit un gain de 9.38 %.

On remarquera que ces calculs ne tiennent pas compte des échanges de données entre le coprocesseur et l'extérieur, ces échanges étant beaucoup plus nombreux dans la mise en oeuvre de la première méthode. Le temps nécessaire pour effectuer ces échanges dépend de la fréquence d'horloge utilisée pour cadencer le fonctionnement des éléments extérieurs (tels que la processeur de traitement 2, la mémoire 3 et le bus de communication 5 du circuit 1), cette fréquence étant en pratique généralement inférieure à la fréquence de l'horloge du coprocesseur.

La capacité du coprocesseur selon l'invention à mettre en oeuvre des opérations du type A $*$ B + C présente également d'autres avantages.

**Méthode RSA.**

La méthode de cryptage RSA nécessite de faire des calculs de type C = $M^D$ mod N avec M un message à crypter ou à décrypter, N un modulo tel que N = P $*$ Q, avec P et Q des nombres entiers premiers, et D tel que (D $*$ E) mod [(P - 1) $*$ (Q - 1)] = 1, avec E connu.

Un algorithme pour réaliser ce calcul est le suivant :

A = (M mod P)$^{D \bmod (P - 1)}$ mod P
B = (M mod Q)$^{D \bmod (Q - 1)}$ mod Q
U = $Q^{-1}$ mod P
Si A < B mod P alors

$$C = [[(A + P - (B \bmod P)) * U] \bmod P] * Q + B$$

Sinon

$$C = [[(A - (B \bmod P)) * U] \bmod P] * Q + B$$

L'invention permet de calculer C qui est de la forme X $*$ Q + B, en chargeant B dans le registre 11. On remarquera à ce propos qu'il est particulièrement intéressant de prévoir un multiplexeur 14 ayant une entrée reliée à une borne d'entrée du circuit. En effet, dans la méthode exposée ci-dessus traitant de la multiplication pour des données de taille supérieure à celle des registres, le contenu du registre 11 est produit à l'intérieur du circuit. Une borne d'entrée n'est donc pas utilisée dans ce cas pour charger le contenu du registre 11. Si on souhaite calculer A $*$ B + C, avec C quelconque, il doit être possible de rentrer la donnée C dans le registre 11 en reliant une entrée du multiplexeur à une borne d'entrée.

**Opération Pfield avec dépassement de capacité.**

En pratique, le fonctionnement du coprocesseur est commandé par un circuit de séquencement qui contrôle les différents éléments du coprocesseur selon l'opération que l'on souhaite réaliser. Typiquement, ce circuit de séquencement comprend des compteurs et/ou décompteurs affectés au contrôle des boucles de calcul et au contrôle des opérations au sein des boucles.

Le nombre de passages dans le registres 16, pour une opération donnée, est fixé par la taille de l'opérande A. Connaissant la taille de l'opérande, il est possible d'incrémenter un compteur au rythme des passages, et de comparer la valeur du compteur au nombre de passages nécessaires, de telle sorte qu'on arrête le coprocesseur quand l'opération est terminée. Un problème peut se poser si la valeur de comptage représentative de la taille de l'opérande est supérieure à la capacité de comptage du compteur.

Supposons par exemple que l'on souhaite réaliser $P_{field}(A, B)_N$ avec A codé sur m" $*$ k bits, la capacité de comptage du compteur étant de m' $*$ k bits avec m' inférieur à m". L'opération est réalisable avec le circuit illustré sur la figure 3. On réalise en premier lieu l'opération Pfield avec les m' premier blocs de A et on stocke le résultat dans le registre 11. IL suffit alors de relancer l'opération avec les (m" - m') derniers blocs de A, le contenu du registre 11 étant lors de la première multiplication additionné à la donnée produite par le circuit 19. Cela nécessite de connaître l'état d'un seul signal de commande indiquant quelle est l'entrée du multiplexeur 40 à sélectionner.

Tel que le circuit selon l'état de la technique fonctionne, cette méthode n'est pas possible. En effet, la mise en oeuvre d'une opération Pfield comprend le chargement automatique dans le registre 11 de zéros logiques. Autrement dit, on doit traiter de manière externe le problème de dépassement de capacité, ce qui et préjudiciable en terme de temps de calcul et d'espace mémoire (il faut stocker le programme adéquate).

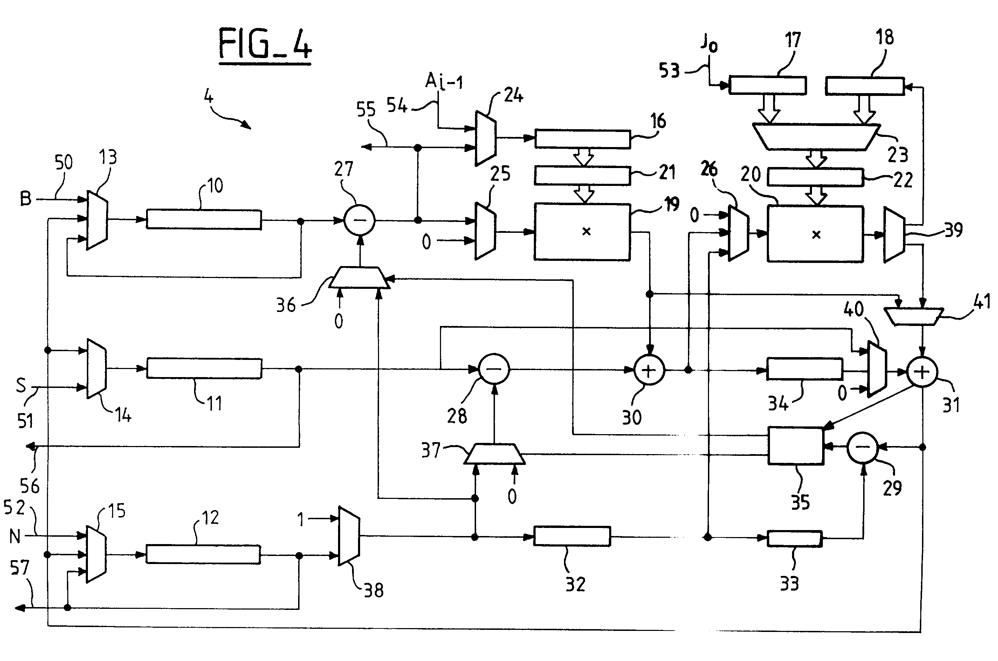

La figure 4 illustre un autre coprocesseur 4 selon l'invention. Il comprend les mêmes éléments que le circuit illustré sur la figure 3. Les multiplexeurs 40 et 41 sont disposés autrement. On utilise alors le circuit d'addition 31 au lieu du circuit d'addition 30.

Le multiplexeur 40 comprend trois entrées série et une sortie série. La première entrée de ce multiplexeur 40 est reliée à la première entrée du circuit 28. La sortie du circuit 28 est reliée à la deuxième entrée du circuit 30, de manière analogue au circuit 4 illustré sur la figure 1. La deuxième entrée du multiplexeur 40 est reliée à la sortie de la cellule 34 (cette sortie n'étant plus reliée à la première entrée du circuit 31). La troisième entrée du multiplexeur 40 est reliée à un zéro logique. La sortie du multiplexeur 40 est reliée à la première entrée du circuit 31.

Le multiplexeur 41 comprend deux entrées série et une sortie série. La première entrée de ce multiplexeur 41 est reliée à la sortie du circuit 19. La deuxième entrée du multiplexeur 41 est reliée à la deuxième sortie du démultiplexeur 39 (qui n'est plus reliée à la deuxième entrée du circuit 31). La sortie du multiplexeur 41 est reliée à la deuxième entrée du circuit 31. Quant à la sortie du circuit 31, elle est reliée aux entrées des multiplexeurs 13, 14, et 15 tel qu'illustré sur la figure 1.

On remarquera que le circuit illustré sur la figure 4 est moins flexible d'utilisation que celui de la figure 3. En ce qui concerne la mise en oeuvre d'une opération non modulaire A * B ou A * B + C, la configuration illustrée sur la figure 4 est équivalente en terme de temps de calcul et de complexité à la configuration illustrée sur la figure 3. Par contre, elle ne permet pas de mise en oeuvre d'opérations modulaires telles que le permet le circuit de la figure 3. Cela vient du fait que le zéro logique imposé sur la troisième entrée du multiplexeur 40 est situé en aval des circuits 30 et 26. Autrement dit, si il est nécessaire de considérer un contenu du registre 11 composé de zéros, on doit d'une manière ou d'une autre charger ce registre avec les dits zéros. On doit soit rajouter une entrée au multiplexeur 14, soit rajouter un multiplexeur en amont du circuit 30, ce multiplexeur ayant le même rôle que le multiplexeur 40 du circuit illustré sur la figure 3. Autrement dit, l'encombrement est alors plus important pour le circuit de la figure 4 que pour le circuit de la figure 3, et son utilisation est plus complexe. On remarquera que la première entrée du multiplexeur 40 du circuit de la figure 3 aurait pue être reliée à la sortie du circuit 28.

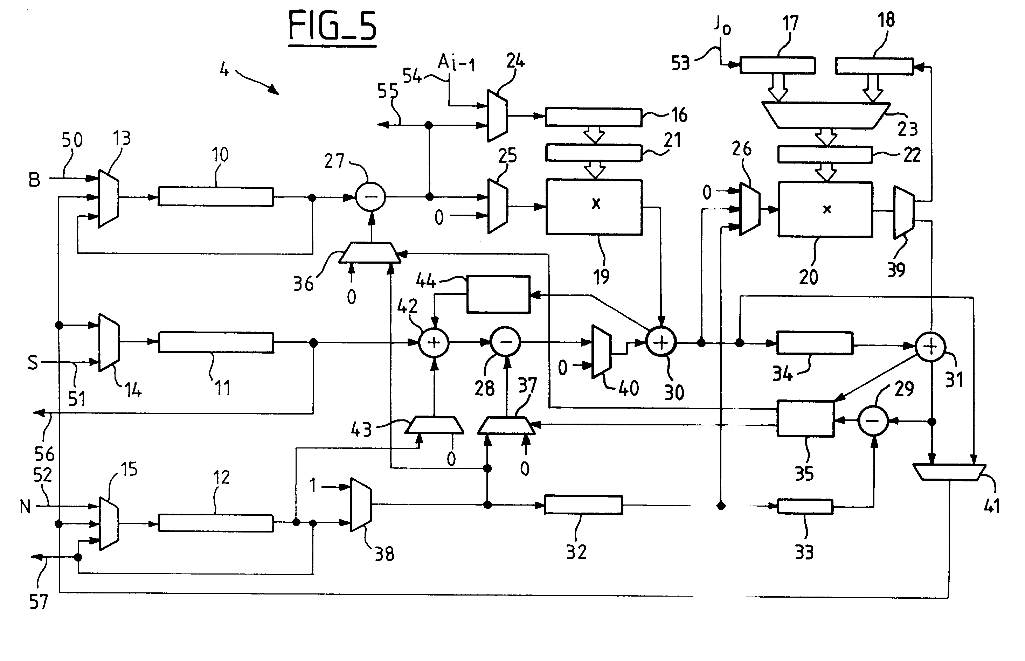

La figure 5 illustre un autre coprocesseur selon l'invention. Il comprend les mêmes éléments que le circuit illustré sur la figure 3, ces éléments étant agencés de la même manière.

Il comprend en outre un circuit 42 d'addition, un multiplexeur 43 à deux entrées et un circuit 44 de gestion de retenue.

Ce circuit permet de mettre en oeuvre une opération du type A * B + C + D, avec C et D données stockées dans les registres 11 et 12, et A * B étant produit par le circuit 19 de multiplication.

Dans l'exemple illustré sur la figure 5, le circuit 42 d'addition est disposé entre la sortie du registre 11 et le circuit 28 de soustraction. Le circuit 42 comprend deux entrées série et une sortie série. Sa sortie série est reliée à la première entrée du circuit 28. Sa première entrée est reliée à la sortie du registre 11 et sa deuxième entrée est reliée à la sortie du multiplexeur 43. Le multiplexeur 43 a une entrée reliée à la sortie du registre 12 et son autre entrée reçoit un zéro logique. Le circuit 42 fournit ainsi soit le résultat de l'addition des contenus des registres 11 et 12 (C + D), soit le contenu du registre 11 (C + 0).

On notera que le circuit d'addition aurait pu être disposé différemment, par exemple entre le circuit 28 et le circuit 30, voire en aval du circuit 30. Le multiplexeur 43 pourra être incorporé fonctionnellement au circuit 42 si ce dernier comprend une ou des entrées de commande permettant d'imposer un ou des états logiques sur sa deuxième ou ses deux entrées.

Le circuit 44 a pour fonction de détecter un éventuel dépassement de capacité lors d'opérations intermédiaires. Ce dépassement intervient si l'addition d'une donnée avec une donnée fournie par le circuit 19 de multiplication aboutit à un résultat codé sur un nombre de bits supérieur à la taille des données produites par le circuit 19 de multiplication (c'est-à-dire pratiquement à la somme des tailles des registres 10 et 16). Ce cas peut se présenter par exemple si les opérations sont effectuées sur des données codées sur un nombre de bits supérieur à n. Ce cas peut également, comme on le verra par la suite, se présenter pour des opérations sur des données de taille égale à n. Ce circuit 44 détecte le dépassement dans le circuit d'addition placé le plus en aval (c'est à dire le circuit 30 dans l'exemple illustré sur la figure 5), c'est-à-dire dans le circuit d'addition intervenant en dernier dans une boucle de calcul. Il agit, dans la boucle de calcul suivante, au niveau de l'un des circuits d'addition (dans l'exemple il s'agit du circuit 42) de manière à ce que la retenue soit prise en compte.

Le coprocesseur illustré à la figure 5 permet, grâce à l'ajout des éléments 42, 43 et 44 de réaliser des opérations Pfield sur des opérandes codées sur un nombre m' * k bits avec m' > m de manière plus simple et plus rapide que les circuits des figures 1, 3 et 4. Pour cela on manipule les opérandes A, B et N en les divisant en q (q entier) sous-opérandes de n bits : $A_{q-1} A_{q-2} \ldots A_0$, $B_{q-1} B_{q-2} \ldots B_0$, $N_{q-1} N_{q-2} \ldots N_0$. On notera que A et B pourront avoir en pratique des tailles différentes. On suppose ici, pour simplifier, que A et B ont la même taille. On ne rentrera pas dans le détail de fonctionnement au pas à pas des éléments du coprocesseur, celui-ci ne posant pas de problème à l'homme du métier connaissant le document D2.

La méthode est la suivante :

### 1.1 - Multiplication de B par la première sous-opérande de A:

1 - Calcul de $A_0 * B_0 + 0 + 0$.

Le résultat est de la forme $R_{10} R_{00}$ avec $R_{10}$ et $R_{00}$ données codées sur m mots de k bits.

On sort $R_{00} = X_0$ du registre 12 et on le stocke dans une mémoire (par exemple la mémoire 3 du circuit 1).

2 - Calcul de $A_0 * B_1 + R_{10} + 0$.

Le résultat est de la forme $R_{11} R_{01}$ avec $R_{11}$ et $R_{01}$ codées sur n bits.

On sort $R_{01} = X_1$ du registre 12 et on le stocke dans une mémoire.

.

.

Q - Calcul de $A_0 * B_{q-1} + R_{1q-2} + 0$.

Le résultat est de la forme $R_{1q-1} R_{0q-1}$ avec $R_{1q-1}$ et $R_{0q-1}$ codées sur n bits.

On sort $R_{1q-1} = X_q$ et $R_{0q-1} = X_{q-1}$ des registres 11 et 12 et on les stocke dans une mémoire.

Le résultat de la multiplication est la donnée $X_q X_{q-1} ..... X_1 X_0$.

Dans cette étape 1.1, la méthode est identique à celle mise en oeuvre par le circuit de la figure 3.

### 1.2 - Calcul du résultat d'une multiplication :

$X_0 * J_0 = Y$, avec Y de la forme $Y_1 Y_0$, $Y_1$ et $Y_0$ étant codées sur n bits, sortie et mémorisation de $Y_0$

### 1.3 - Calcul du résultat de la multiplication de la première sous-opérande de Y par N :

1 - Calcul de $Y_0 * N_0 + Y_0 + 0$.

Le résultat est de la forme $T_{10} T_{00}$ avec $T_{10}$ et $T_{00}$ codées sur n bits.

On sort $T_{00} = Z_0$ du registre 12 et on le stocke dans une mémoire.

2 - Calcul de $Y_0 * N_1 + X_1 + T_{10}$.

Le résultat est de la forme $T_{11} T_{01}$ avec $T_{11}$ et $T_{01}$ codées sur n bits.

On sort $T_{01} = Z_1$ du registre 12 et on le stocke dans une mémoire.

.

.

Q - Calcul de $Y_0 * N_{q-1} + X_{q-1} + T_{1q-2}$.

Le résultat est de la forme $T_{1q-1} T_{0q-1}$ avec $T_{1q-1}$ et $T_{0q-1}$ codées sur n bits.

On sort $T_{1q-1}$ et $T_{0q-1} = Z_{q-1}$ des registres 11 et 12 et on les stocke dans une mémoire.

On calcule $X_q + T_{1q-1} = Z_q$.

Le résultat Z de la multiplication est la donnée $Z_q Z_{q-1} ..... Z_1 Z_0$.

Stockage de $S(1) = Z/2^k - (N$ ou $0)) = S_q (1) S_{q-1} (1) ..... S_1 (1) S_0 (1)$.

### 2 - Reprise des étapes 1.1 à 1.3 en considérant la deuxième sous-opérande de A en modifiant l'étape 1.1 tel que ci-dessous :

1 - Calcul de $A_1 * B_0 + S_0 (1) + 0$.

Le résultat est de la forme $R_{10} R_{00}$ avec $R_{10}$ et $R_{00}$ données codées sur n bits.

On sort $R_{00} = X_0$ du registre 12 et on le stocke dans une mémoire (par exemple la mémoire 3 du circuit 1).

2 - Calcul de $A_1 * B_1 + S_1(1) + R_{10}$.

Le résultat est de la forme $R_{11} R_{01}$ avec $R_{11}$ et $R_{01}$ codées sur n bits.

On sort $R_{01} = X_1$ du registre 12 et on le stocke dans une mémoire.

.

.

Q - Calcul de $A_1 * B_{q-1} + S_{q-1}(1) + R_{1q-2}$.

Le résultat est de la forme $R_{1q-1} R_{0q-1}$ avec $R_{1q-1}$ et $R_{0q-1}$ codées sur n bits.

On sort $R_{1q-1}$ et $R_{0q-1} = X_{q-1}$ des registres 11 et 12 et on les stocke dans une mémoire.

Calcul de $X_q = R_{1q-1} + S_q(1)$ qui donne alors le résultat de la multiplication X avec X de la forme $X_q X_{q-1} ..... X_1 X_0$.

.

.

Q - Reprises des étapes ci-dessus en considérant la q-ième sous-opérande de A.

Le résultat final du calcul est S(q) - (N ou 0).

Les améliorations illustrées sur la figure 5 permettent d'obtenir, par rapport au circuit de la figure 3, un gain de temps dans la mise en oeuvre des suites d'opérations, en augmentant le nombre d'opérations réalisées simultanément. Ce gain de temps est réalisé à partir de l'étape 1.3.

**Gain en temps de calcul.**

Le temps de calcul est mesuré en nombre de cycles d'horloge du coprocesseur.

Calcul des $A * B + R + S : q . q . m . (n + k) = n . (m + 1) . q^2$

Calcul des $X_q : (q - 1) . n = n . q - n$

Calcul des $Y : q . m . (n + k) = n . (m + 1) . q$

Calcul des $Y * N + T + X : q . q . m . (n + k) = n . (m + 1) . q^2$

Calcul des $z_q : q . n = n . q$

Le nombre de cycles nécessaires pour réaliser les calculs est donné par la formule suivante : $2 . n . (m + 1) . q^2 + n . (m + 3) . q - n$.

Considérons $q = 3$ et $k = 32$.

Pour $m = 8$ ( $n = 256$), le procédé selon l'état de la technique nécessite 63 488 cycles et le procédé ci-dessus nécessite 49 664 cycles, soit un gain de 21.77 % (le gain était de 15.72 % pour le circuit de la figure 3).

Pour $m = 16$ ($n = 512$), le premier procédé nécessite 212 992 cycles et le deuxième procédé ci-dessus nécessite 185 344 cycles, soit un gain de 12.98 % (le gain était de 9.38 % pour le circuit de la figure 3).

On voit donc que le gain supplémentaire en temps de calcul par rapport au circuit de la figure 3 est de l'ordre de 5 % pour $m = 8$ et de 3.5 % pour $m = 16$.

En réalité, le gain supplémentaire sera plus important, les calculs de gain ne prenant pas en compte les échanges du coprocesseur avec son environnement.

Bien que l'on ait considéré l'ajout du circuit 42 d'addition dans le circuit de la figure 4, on comprendra que l'on aurait pu tout aussi bien réaliser cette amélioration en modifiant le circuit illustré sur la figure 5, la mise en oeuvre de l'opération $A * B + C + D$ étant alors réalisée avec le circuit 31 d'addition.

**Illustration du dépassement de capacité.**

On considèrera pour simplifier $n$ égal à 16 et $k$ égal à 8.

A titre d'exemple, supposons que l'on souhaite calculer $X = A * B + C + D$, avec $A = FFFF$, $B = B_1 B_0 = FFFF$ avec $B_0 = 00FF$ et $B_1 = FF00$, $C = FFFF$ et $D = FFFF$. A, B, C et D sont donc codées sur n bits.

Le résultat X est FFFF FFFF, autrement dit il est codé sur 2.n bits. Le résultat final de l'opération peut donc être stocké dans deux registres de taille n.

Pour effectuer l'opération, on va stocker A dans le registre 10. $B_0$ et $B_1$ sont stockés successivement dans le registre 16, et le résultat final X est stocké dans les registres 11 pour les poids fort et dans le registre 12 pour les poids faibles.

On procède de la manière suivante :

Etape 1:

$$A * B_0 + C + D = FFFF * FF + FFFF + FFFF$$

$$= FFFF * FF + 01\ FFFE$$

$$= FE\ FF01 + 01\ FFFE$$

$$= 100\ FEFF$$

Z = 00FE, codée sur n bits, est stockée dans le registre 11.

FF (première moitié du poids faible de X) est stockée dans la première moitié du registre 12.

La retenue **1** n'est pas stockée dans le registre 11 et est à ajouter à l'étape suivante.

Etape 2:

$$A * B_1 + 0 + Z(+1) = FFFF * FF00 + 0000\ FE00\ (+ 1\ 00\ 0000)$$

$$= FFFF * FF00 + 0100\ FE00$$

$$= FEFF\ 0100 + 0100\ FE00$$

$$= FFFF\ FF00$$

Les 0 en italique sont représentés pour qu'il y ait une cohérence mathématique entre les étapes 1 et 2. En pratique, ils ne sont pas présents réellement dans la mise en oeuvre de la boucle de l'étape 2.

Le multiplexeur 43 est sélectionné de manière à fournir en permanence l'état logique "zéro" sur sa sortie.

Le poids fort de X (FFFF) est stocké dans le registre 11 et le reste du poids faible de X (FF) est stocké dans le registre 12, la première moitié du poids faible de X étant décalée vers la deuxième moitié du registre 12. Globalement on a FFFF dans ce registre.

Le résultat final est donc bien FFFF FFFF, sans dépassement de la capacité de stockage du registre 11 lors du décalage en fin de première étape dans ce registre de la donnée Z.

**Revendications**

1.  Coprocesseur (4) convenant à la mise en oeuvre d'opération modulaire selon la méthode de Montgomery comprenant :

    -   un premier, un deuxième et un troisième registres (10, 11, 16),
    -   au moins une borne d'entrée (50, 51, 54) pour recevoir des données binaires à stocker dans ces registres,
    -   un circuit (19) de multiplication permettant de réaliser une opération de multiplication entre deux données stockées dans les premier et troisième registres (11, 16),
    -   un premier circuit (30) d'addition permettant de réaliser une opération d'addition entre une donnée stockée dans le deuxième registre (11) et une donnée produite par le circuit (19) de multiplication,
    -   un circuit (28) de soustraction placé entre le deuxième registre (11) et le circuit (30) d'addition permettant de réaliser une opération de soustraction entre une donnée stockée dans le deuxième registre (11) et une donnée stockée dans un quatrième registre (12),
    -   une cellule à retard (34) et un deuxième circuit (31) d'addition placés entre le premier circuit (30) d'addition et l'entrée du deuxième registre (11), caractérisé en ce qu'il comprend
    -   des moyens (40, 41) de multiplexage permettant de fournir à une entrée d'un des circuits (30, 31) d'addition le contenu du deuxième registre (11) ou un état logique permanent, de relier une autre entrée dudit circuit d'addition à une sortie du circuit (19) de multiplication et de relier une sortie dudit circuit d'addition à une entrée du deuxième registre.

2.  Coprocesseur selon la revendication 1, caractérisé en ce que les moyens de multiplexage comprennent un premier et un deuxième multiplexeurs (40, 41), le premier multiplexeur (40) ayant une entrée recevant un état logique permanent, une entrée reliée à la sortie du circuit (28) de soustraction, et une sortie reliée à une entrée du premier circuit (30) d'addition, le deuxième multiplexeur (41) ayant une entrée reliée à la sortie du premier circuit (30) d'addition et une sortie reliée à l'entrée du deuxième registre (11).

3.  Coprocesseur selon la revendication 2, caractérisé en ce que le premier multiplexeur (40) comprend une troisième entrée reliée à la sortie du deuxième registre (11).

4.  Coprocesseur selon la revendication 1, caractérisé en ce que les moyens de multiplexage comprennent un premier et un deuxième multiplexeurs (40, 41), le premier multiplexeur (40) ayant une entrée recevant un état logique permanent, une entrée reliée à la sortie du deuxième registre (11), et une sortie reliée à une entrée du circuit (28) de soustraction, le deuxième multiplexeur (41) ayant une entrée reliée à la sortie du premier circuit (30) d'addition et une sortie reliée à l'entrée du deuxième registre (11).

5.  Coprocesseur selon la revendication 1, caractérisé en ce que les moyens de multiplexage comprennent un premier et un deuxième multiplexeurs (40, 41), le premier multiplexeur (40) ayant une entrée recevant un état logique permanent, une entrée reliée à la sortie du deuxième registre (11), et une sortie reliée à une première entrée du deuxième circuit (31) d'addition, le deuxième multiplexeur (41) ayant une entrée reliée à la sortie du circuit (19) de multiplication et une sortie reliée à une deuxième entrée du deuxième circuit (31) d'addition.

6. Coprocesseur selon la revendication 1, caractérisé en ce que les moyens de multiplexage comprennent un premier et un deuxième multiplexeurs (40, 41), le premier multiplexeur (40) ayant une entrée recevant un état logique permanent, une entrée reliée à la sortie du circuit (28) de soustraction, et une sortie reliée à une première entrée du deuxième circuit (31) d'addition, le deuxième multiplexeur (41) ayant une entrée reliée à la sortie du circuit (19) de multiplication et une sortie reliée à une deuxième entrée du deuxième circuit (31) d'addition.

7. Coprocesseur selon l'une des revendications 5 ou 6, caractérisé en ce que le premier multiplexeur (40) a une entrée reliée à une sortie de la cellule à retard (34).

8. Coprocesseur selon l'une des revendications 5 à 7, caractérisé en ce que l'entrée du deuxième registre (11) est reliée à la sortie d'un multiplexeur (14) ayant une de ses entrées qui reçoit un état logique permanent.

9. Coprocesseur selon l'une des revendications 1 à 8, caractérisé en ce que l'entrée du deuxième registre (11) est reliée à la sortie d'un multiplexeur (14) ayant une de ses entrées reliée à une borne d'entrée (51).

10. Coprocesseur selon l'une des revendications 1 à 9, caractérisé en ce qu'il comprend un troisième circuit (42) d'addition permettant de réaliser en combinaison avec le premier ou le deuxième circuit (30, 31) d'addition une opération d'addition entre les données stockées dans les deuxième et quatrième registres (11, 12) et la donnée produite par le circuit (19) de multiplication.

11. Coprocesseur selon la revendication 10, caractérisé en ce qu'il comprend des moyens (43) de multiplexage permettant de fournir au troisième circuit d'addition le contenu du quatrième registre ou un état logique permanent.

12. Coprocesseur selon l'une des revendications 10 à 11, caractérisé en ce qu'il comprend un circuit (44) de gestion de retenue pour détecter un éventuel dépassement de capacité lors d'opérations intermédiaires telles que le résultat est codé sur un nombre de bits supérieur à la taille des données produites par le circuit (19) de multiplication, ce dépassement de capacité étant pris en compte lors d'opérations postérieures.

13. Dispositif (1) comprenant un processeur (2), une mémoire (3), un bus de communication (5) et un coprocesseur (4) défini selon l'une des revendications 1 à 12.


**Patentansprüche**

1. Ein Koprozessor (4) zur Durchführung modulärer Operationen nach der Montgomery-Methode, mit

   - einem ersten, einem zweiten und einem dritten Register (10, 11, 16),
   - wenigstens einem Eingangsanschluß (50, 51, 54) für den Empfang binärer Daten, die in diesen Registern zu speichern sind,
   - einer Multiplikationsschaltung (19), die eine Multiplikationsoperation zwischen zwei in dem ersten und dritten Register (11, 16) gespeicherten Daten ermöglicht,
   - einer ersten Additionsschaltung (30), die eine Additionsoperation zwischen einer in dem zweiten Register (11) gespeicherten Größe und einer durch die Multiplikationsschaltung (19) erzeugten Größe ermöglicht,
   - einer Subtraktionsschaltung (28), die zwischen dem zweiten Register (11) und der Additionsschaltung (30) angeordnet ist und eine Subtraktionsoperation zwischen einer in dem zweiten Register (11) gespeicherten Größe und einer in einem vierten Register (12) gespeicherten Größe ermöglicht,
   - einem Verzögerungsglied (34) und einer zweiten Additionsschaltung (31), die zwischen der ersten Additionsschaltung und dem Eingang des zweiten Registers (11) angeordnet ist,

   gekennzeichnet durch

   - Multiplexvorrichtungen (40, 41), die es ermöglichen, einem Eingang einer der Additionsschaltungen (30, 31) den Inhalt des zweiten Registers (11) oder einen festen logischen Wert zu schicken, einen anderen Eingang der Additionsschaltung an einen Ausgang der Multiplikationsschaltung (19) anzuschließen und einen Ausgang der Additionsschaltung an einen Eingang des zweiten Registers anzuschließen.

2. Koprozessor nach Anspruch 1, dadurch gekennzeichnet, daß die Multiplexvorrichtungen einen ersten und einen zweiten Multiplexer (40, 41) aufweisen, wobei der erste Multiplexer (40) einen Eingang, der einen festen logischen Wert empfängt, einen Eingang, der mit dem Ausgang der Subtraktionsschaltung (28) verbunden ist, und einen Ausgang, der mit einem Eingang der ersten Additionsschaltung (30) verbunden ist, umfaßt, wobei der zweite Multiplexer (41) einen Eingang, der mit dem Ausgang der ersten Additionsschaltung (30) verbunden ist, und einen Ausgang, der mit dem Eingang des zweiten Registers (11) verbunden ist, umfaßt.

3. Koprozessor nach Anspruch 2, dadurch gekennzeichnet, daß der erste Multiplexer (40) einen dritten Eingang aufweist, der mit dem Ausgang des zweiten Registers (11) verbunden ist.

4. Koprozessor nach Anspruch 1, dadurch gekennzeichnet, daß die Multiplexvorrichtungen einen ersten und einen zweiten Multiplexer (40, 41) aufweisen, wobei der erste Multiplexer (40) einen Eingang, der einen festen logischen Wert empfängt, einen Eingang, der mit dem Ausgang des zweiten Registers (11) verbunden ist, und einen Ausgang, der mit einem Eingang der Subtraktionsschaltung (28) verbunden ist, umfaßt, und der zweite Multiplexer (41) einen Eingang, der mit dem Ausgang der ersten Additionsschaltung (30) verbunden ist und einen Ausgang, der mit dem Eingang des zweiten Registers (11) verbunden ist, umfaßt.

5. Koprozessor nach Anspruch 1, dadurch gekennzeichnet, daß die Multiplexvorrichtungen einen ersten und einen zweiten Multiplexer (40, 41) aufweisen, wobei der erste Multiplexer (40) einen Eingang, der einen festen logischen Wert empfängt, einen Eingang, der mit dem Ausgang des zweiten Registers (11) verbunden ist, und einen Ausgang, der mit einem ersten Eingang der zweiten Additionsschaltung (31) verbunden ist, umfaßt, wobei der zweite Multiplexer (41) einen Eingang, der mit dem Ausgang der Multiplikationsschaltung (19) verbunden ist, und einen Ausgang, der mit einem zweiten Eingang der zweiten Additionsschaltung (31) verbunden ist, umfaßt.

6. Koprozessor nach Anspruch 1, dadurch gekennzeichnet, daß die Multiplexvorrichtungen einen ersten und einen zweiten Multiplexer (40, 41) aufweisen, wobei der erste Multiplexer (40) einen ersten Eingang aufweist, der einen festen logischen Wert empfängt, einen Eingang, der mit dem Ausgang der Subtraktionsschaltung (28) verbunden ist, und einen Ausgang, der mit einem ersten Eingang der zweiten Additionsschaltung (31) verbunden ist, umfaßt und der zweite Multiplexer (41) einen Eingang, der mit dem Ausgang der Multiplikationsschaltung (19) verbunden ist, und einen Ausgang, der mit einem zweiten Eingang der zweiten Additionsschaltung (31) verbunden ist, umfaßt.

7. Koprozessor nach einem der Ansprüche 5 oder 6, dadurch gekennzeichnet, daß der erste Multiplexer (40) einen Eingang aufweist, der mit dem Ausgang des Verzögerungsgliedes (34) verbunden ist.

8. Koprozessor nach einem der Ansprüche 5 bis 7, dadurch gekennzeichnet, daß der Eingang des zweiten Registers (11) mit dem Ausgang eines Multiplexers (14) verbunden ist, dessen einer Eingang einen festen logischen Wert empfängt.

9. Koprozessor nach einem der Ansprüche 1 bis 8, dadurch gekennzeichnet, daß der Eingang des zweiten Registers (11) mit dem Ausgang eines Multiplexers (14) verbunden ist, dessen einer Eingang mit einem Eingangsanschluß (51) verbunden ist.

10. Koprozessor nach einem der Ansprüche 1 bis 9, dadurch gekennzeichnet, daß er eine dritte Additionsschaltung (42) aufweist, die in Verbindung mit der ersten oder der zweiten Additionsschaltung (30, 31) eine Additionsoperation zwischen den in den zweiten und vierten Registern (11, 12) gespeicherten Daten und der durch die Multiplikationsschaltung (19) erzeugten Größe ermöglicht.

11. Koprozessor nach Anspruch 10, dadurch gekennzeichnet, daß er Multiplexvorrichtungen (43) aufweist, die es ermöglichen, der dritten Additionsschaltung den Inhalt des vierten Registers oder einen festen logischen Wert zu liefern.

12. Koprozessor nach einem der Ansprüche 10 bis 11, dadurch gekennzeichnet, daß er eine Speichersteuerschaltung aufweist, die ein eventuelles Überlaufen der Kapazität bei Zwischenoperationen erfaßt, wobei beispielsweise das Ergebnis auf einer Anzahl von Bits kodiert ist, die größer als die Größe der durch die Multiplikationsschaltung (19) erzeugten Daten ist, wobei dieses Überlaufen der Kapazität während nachfolgender Operationen berücksichtigt wird.

13. Vorrichtung (1) mit einem Koprozessor (2), einem Speicher (3), einem Kommunikationsbus (5) und einem in den Ansprüchen 1 bis 12 definierten Koprozessor (4).

## Claims

1. Coprocessor (4) suitable for performing a modular operation according to the Montgomery method, comprising:

   - first, second and third registers (10, 11, 16),

   - at least one input terminal (50, 51, 54) for receiving binary data to be stored in these registers,

   - a multiplication circuit (19) for performing a multiplication operation between two data stored in the first and third registers (11, 16),

   - a first addition circuit (30) for performing an addition operation between a data item stored in the second register (11) and a data item produced by the multiplication circuit (19),

   - a subtraction circuit (28) placed between the second register (11) and the addition circuit (30), for performing a subtraction operation between a data item stored in the second register (11) and a data item stored in a fourth register (12),

   - a delay cell (34) and a second addition circuit (31) placed between the first addition circuit (30) and the input of the second register (11),

   characterised in that it comprises

   - multiplexing means (40, 41) for supplying, to an input of one of the addition circuits (30, 31), the content of the second register (11) or a permanent logic state, for connecting another input of the said addition circuit to an output of the multiplication circuit (19) and for connecting an output of the said addition circuit to an input of the second register.

2. Coprocessor according to Claim 1, characterised in that the multiplexing means comprise first and second multiplexers (40, 41), the first multiplexer (40) having an input receiving a permanent logic state, an input connected to the output of the subtraction circuit (28), and an output connected to an input of the first addition circuit (30), the second multiplexer (41) having an input connected to the output of the first addition circuit (30) and an output connected to the input of the second register (11).

3. Coprocessor according to Claim 2, characterised in that the first multiplexer (40) comprises a third input connected to the output of the second register (11).

4. Coprocessor according to Claim 1, characterised in that the multiplexing means comprise first and second multiplexers (40, 41), the first multiplexer (40) having an input receiving a permanent logic state, an input connected to the output of the second register (11), and an output connected to an input of the subtraction circuit (28), the second multiplexer (41) having an input connected to the output of the first addition circuit (30) and an output connected to the input of the second register (11).

5. Coprocessor according to Claim 1, characterised in that the multiplexing means comprise first and second multiplexers (40, 41), the first multiplexer (40) having an input receiving a permanent logic state, an input connected to the output of the second register (11), and an output connected to a first input of the second addition circuit (31), the second multiplexer (41) having an input connected to the output of the multiplication circuit (19) and an output connected to a second input of the second addition circuit (31).

6. Coprocessor according to Claim 1, characterised in that the multiplexing means comprise first and second multiplexers (40, 41), the first multiplexer (40) having an input receiving a permanent logic state, an input connected to the output of the subtraction circuit (28), and an output connected to a first input of the second addition circuit (31), the second multiplexer (41) having an input connected to the output of the multiplication circuit (19) and an output connected to a second input of the second addition circuit (31).

7. Coprocessor according to one of Claims 5 or 6, characterised in that the first multiplexer (40) has an input connected to the output of the delay cell (34).

8. Coprocessor according to one of Claims 5 to 7, characterised in that the input of the second register (11) is connected to the output of a multiplexer (14) having one of its inputs receiving a permanent logic state.

9. Coprocessor according to one of Claims 1 to 8, characterised in that the input of the second register (11) is connected to the output of a multiplexer (14) having one of its inputs connected to an input terminal (51).

10. Coprocessor according to one of Claims 1 to 9, characterised in that it comprises a third addition circuit (42) for performing, in combination with the first or second addition circuit (30, 31), an addition operation between the data stored in the second and fourth registers (11, 12) and the data item produced by the multiplication circuit (19).

11. Coprocessor according to Claim 10, characterised in that it comprises multiplexing means (43) for supplying, to the third addition circuit, the content of the fourth register or a permanent logic state.

12. Coprocessor according to one of Claims 10 to 11, characterised in that it comprises a carry management circuit (44) for detecting any exceeding of capacity during intermediate operations such that the result is coded in a number of bits greater than the size of the data produced by the multiplication circuit (19), this exceeding of capacity being taken into account during subsequent operations.

13. Device (1) comprising a processor (2), a memory (3), a communication bus (5) and a coprocessor (4) defined according to one of Claims 1 to 12.

FIG_1

EP 0 793 165 B1

# FIG_2

Message clair

Message crypté

**FIG_3**

FIG_4

FIG_5